# NEUE EUROPÄISCHE PATENTSCHRIFT

(11) **EP 1 128 972 B2**
(45) Veröffentlichungstag und Bekanntmachung des Hinweises auf die Entscheidung über den Einspruch: **15.06.2005**
(45) Hinweis auf die Patenterteilung: 03.07.2002
(21) Anmeldenummer: 99972162.4
(22) Anmeldetag: 09.11.1999
(51) Int. Cl.: B60J 7/00, B62D 65/00

(54) **DACHMODUL FÜR EIN FAHRZEUG**
ROOF MODULE FOR A VEHICLE
MODULE TOIT DE VEHICULE

(30) Priorität: 13.11.1998 DE 19852383
(43) Veröffentlichungstag der Anmeldung: 05.09.2001
(73) Patentinhaber: Webasto Vehicle Systems International GmbH, 82131 Stockdorf (DE)
(72) Erfinder: HAHN, Roland, D-82110 Germering (DE)
(74) Vertreter: Wiese, Gerhard
(86) Internationale Anmeldenummer: PCT/EP1999/008562
(87) Internationale Veröffentlichungsnummer: WO 2000/029234

(56) Entgegenhaltungen:
- DE-A- 2 856 462
- DE-A- 19 642 648
- DE-C- 4 238 714
- DE-C- 4 308 215
- DE-C- 19 716 389
- DE-C- 19 724 592
- US-A- 5 060 440
- US-A- 5 213 626
- US-A- 5 409 290

## Beschreibung

Die Erfindung betrifft ein Dachmodul für ein Fahrzeug.

Aus der US 5 409 290 ist eine Glasplatte für ein Fahrzeugdach bekannt, die mit einer zumindestens in Teilbereichen parallel darunter angeordneten Versteifungsplatte mittels einer Kunststoff-Umschäumung verbunden ist.

Es ist allgemein bekannt, Dachelemente für Fahrzeugdächer, z.B. durchsichtige Glasscheiben oder Solarzellenelemente, mit einem geeigneten Kunststoff, z.B. Polyurethan (PUR), einzeln zu umschäumen, um Befestigungselemente für die Befestigung an bzw. Lagerung in einem Dachrahmen anzubringen. Häufig ist es wünschenswert, in ein Fahrzeugdach mehrere solcher Elemente zu integrieren. In diesem Fall ist jedoch die Herstellung, Handhabung und Montage der einzelnen Elemente insgesamt jedoch recht aufwendig. Hinzu kommt, das die einzelnen Elemente zusätzlich gegeneinander abgedichtet und auch in der Höhe (Z-Richtung) zueinander ausgerichtet werden müssen. Ein Dachmodul nach dem Oberbegriff des Anspruchs 1 ist aus der DE 4 105 396 bekannt. Die nebeneinander angeordneten flächigen Elemente sind Solarzellen, die zwischen zwei Klebetolien angebracht sind. Aus der DE 197 24 592 C1 ist ein Verdeck für ein Kraftfahrzeug bekannt, dessen Verdeckflächenelemente durch ein streifenförmiges Polyurethan (PUR)-Gießharz-Wulstelement miteinander verbunden sind. Die Wulstelemente bilden über die Verdeckflächenelemente nach oben vorstehende Rippen, durch die zusätzliche Windgeräusche verursacht werden und die das optische Erscheinungsbild des Daches beeinträchtigen.

Es ist Aufgabe der vorliegenden Erfindung, ein Dachmodul für ein Fahrzeugdach zu schaffen, wobei mehrere flächige Elemente vorgesehen sind und dennoch insgesamt eine einfache Herstellung, Handhabung und Montage gewährleistet sein soll.

Diese Aufgabe wird gelöst durch die Merkmale des Patentanspruchs 1 bezüglich eines Dachmoduls für ein Fahrzeug, wobei das Dachmodul mindestens zwei flächige, nebeneinander angeordnete Dach-Elemente aufweist, die in einem Schäumwerkzeug durch eine Umschäumung miteinander verbunden werden. Die flächigen Dachmodule sind in Ihren Randbereichen durchgehend umschäumt, um beispielsweise eine Dichtung aufzunehmen.

Bei dieser erfindungsgemäßen Lösung ist vorteilhaft, daß mehrere funktionale flächige Dach-Elemente verwendet werden und gleichzeitig eine einfache Herstellung möglich ist, da nur ein Schäumvorgang mit nur einem Schäumwerkzeug erforderlich ist, sowie die Handhabung und Montage vereinfacht wird, da bei der Montage am Fahrzeug nur ein Dachmodul gehandhabt werden muß. Femer erlaubt es die Schäumtechnik, erfindungsgemäß flächige Elemente verschledener Dicke und/oder aus verschiedenen Materialien zusammen zu umschäumen, wodurch ein "Flush-Design" zwischen einzelnen Elementen möglich ist sowie sämtliche Toleranzen in allen drei Raumrichtungen im Schäumwerkzeug ausgeglichen werden können.

Die Umschäumung besteht vorzugsweise aus Polyurethan. In weiterer Ausgestaltung der Erfindung ist eines der flächigen Dach-Elemente durchsichtig, während das andere undurchsichtig ist und vorzugsweise Solarzellen aufweist. Das Dachmodul ist dabei vorzugsweise als Glas-Festelement ausgebildet, kann jedoch auch als bewegbares Glaselement vorgesehen sein.

In weiterer Ausgestaltung der Erfindung sind die flächigen Dach-Elemente in dem Bereich, in welchem sie sich am nächsten liegen, durch einen Umschäumungsbereich miteinander verbunden, In welchen ein Verstärkungselement, das ein Blecheinleger sein kann, mit eingeschäumt ist.

Im folgenden ist eine Ausführungsform der Erfindung anhand der beiliegenden Zeichnungen näher erläutert. Es zeigen:
- Fig. 1: eine Aufsicht auf ein erfindungsgemäßes Dachmodul;
- Fig. 2: einen Schnitt entlang der Linie II-II in Fig. 1;
- Fig. 3: einen Schnitt entlang der Linie III-III in Fig. 1; und
- Fig. 4: eine Aufsicht auf ein Fahrzeugdach, in welches das In Fig. 1 gezeigte Dachmodul einigebaut ist.

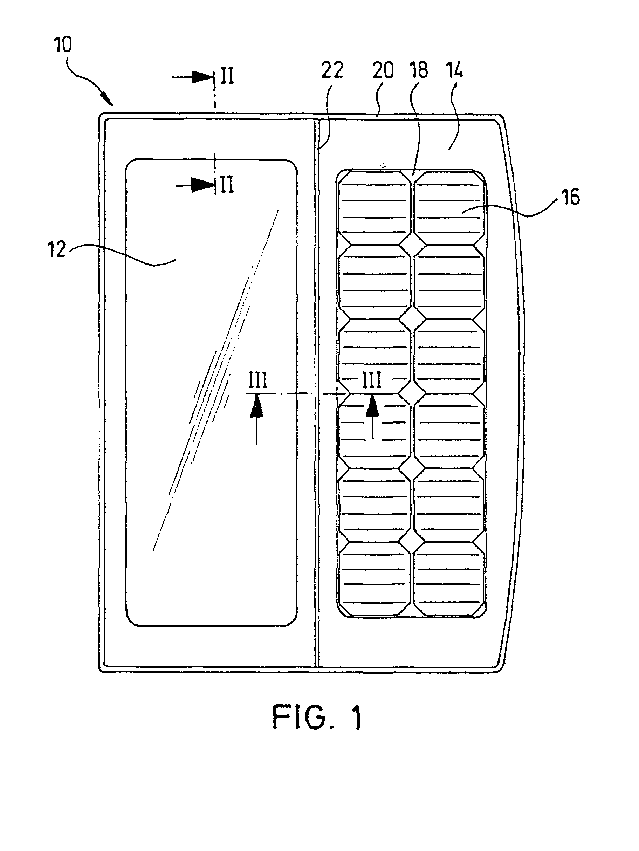

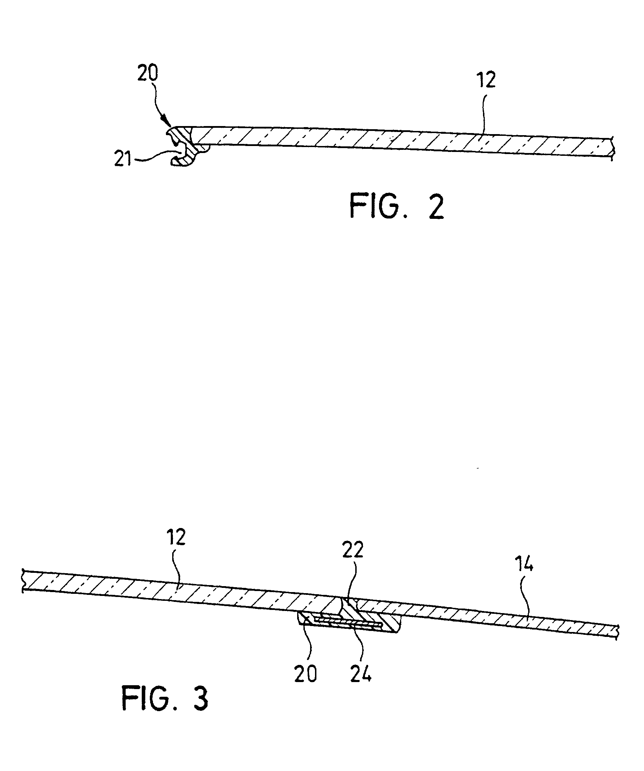

Figuren 1 bis 3 zeigen ein Dachmodul, das als Glas-Festelement ausgebildet ist und insgesamt mit dem Bezugszeichen 10 bezeichnet ist. Das Glas-Festelement 10 umfaßt eine durchsichtige Glasscheibe 12 und ein sich daran in horizontaler Richtung anschließendes Solarelement 14. Das Solarelement 14 ist mit Solarzellen 16 versehen, um Solarstrom zum Nachladen der Fahrzeugbatterie und/oder zum Betreiben eines Verbrauches, wie beispielsweise eines Lüfters, zu erzeugen. Das Solerelement 14 ist in an sich bekannter Weise aufgebaut und umfaßt ein Substrat 18 in Form einer Glasoder Kunststoffscheibe, auf welches die Solarzellen 16 auflaminiert werden; alternativ besteht das Substrat 18 beispielsweise aus Blech, auf welches die Solarzellen 16 aufgeklebt werden. Ferner sind die Solarzellen 16 mit einer geeigneten Schutzabdeckung, z. B. einer Plexiglasscheibe, versehen. Die Glasscheibe 12 und das Solarelement 14 weisen in horizontaler Richtung einen gewissen Abstand auf und sind an ihrem Umfangsrand durchgängig mit einer Polyurethan-Umschäumung (PUR) 20 versehen. Statt Polyurethan kann auch ein anderer geeigneter Kunststoff verwendet werden. In den Seitenbereichen ist die PUR-Umschäumung 20 in der gezelgten Form so ausgebildet, daß sie in einer Nut 21 (siehe Flg. 2) eine Dichtung (nicht dargestellt) aufnehmen kann. Auf diese Weise kann eine vollständige Abdichtung des Glas-Festelements 10 im Seitenbereich erzielt werden. Es sind jedoch ebenso Umschäumungen möglich, in weichen keine Nut 21 vorgesehen sind, weil die notwendigen Dichtungen am festen Dach vorgesehen sind oder die Umschäumung im Randbereich so weich und elastisch ausgebildet ist, daß sie selbst die Dichtungsfunktion übernimmt. In dem Bereich 22, der zwischen der Glasscheibe 12 und dem Solarelement 14 liegt, sind die Glasscheibe 12 und das Solarelement 14 mittels der PUR-Umschäumung 20 miteinander verbunden, wobei zur Verstärkung in dem Bereich 22 unterhalb der Glasscheibe 12 und des Solarlements 14 ein Verstärkungselement in Form eines Blecheinlegers 24 mit eingeschäumt ist. Um den Umschäumungsbereich aus ästhetischen Gründen von oben abzudecken, kann die Glasscheibe 12 in üblicher Weise mit einer Bedruckung (Fritte) versehen sein.

Das beschriebene Dachmodul 10 wird hergestellt, indem die beiden flächigen Elemente, d.h. die Glasscheibe 12 und das Solarelement 14, in einem Schäumwerkzeug positioniert werden, wobei die Toleranzen in allen drei Raumrichtungen durch die relative Positionierung im Schäumwerkzeug auf einfache Weise ausgeglichen werden können. Anschließend werden die beiden Dach-Elemente 12 und 14 in einem Arbeitsgang in dem Schäumwerkzeug mit PUR umschäumt, wobei im Bereich 22 zwischen den beiden Dach-Elementen 12 und 14 der Blecheinleger 24 mit eingeschäumt wird. Dadurch, daß die beiden Dach-Elemente 12 und 14 in dem Bereich 22 mittels der Umschäumung 20 miteinander verbunden sind, wird ein Spalt vermieden, der sich ergeben würde, wenn die Dach-Elemente 12 und 14 als separate Elemente in ein Fahrzeugdach eingebaut würden. Dadurch werden Abdichtungsprobleme vermieden und ein optisch ansprechendes Erscheinungsbild ("Flush-Design") erzielt.

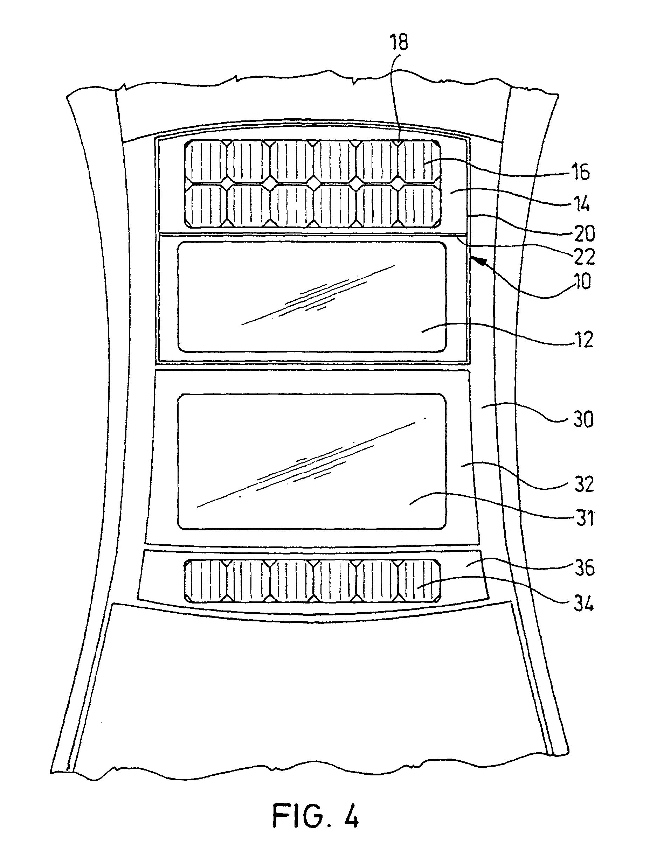

Fig. 4 zeigt ein Fahrzeugdach, in welches das in Fig. 1 bis 3 gezeigte Glas-Festelement 10 eingebaut ist. Das Fahrzeugdach umfaßt eine in einer festen Dachhaut 30 ausgebildete Dachöffnung 31, in welcher ein nicht dargestellter Rahmen befestigt ist. Der Rahmen trägt das Glas-Festelement 10, welches dichtend den hinteren Teil der Dachöffnung 31 verschließt und mittels der Glasscheibe 12 einen Durchsichtsbereich aus dem Fahrzeuginnenraum nach außen schafft, einen verstellbaren Glasdeckel 32, welcher auf dem Rahmen verschwenkbar und/oder verschiebbar gelagert ist, um den vorderen Teil der Dachöffnung ganz oder teilweise freizugeben, sowie eine ausschwenkbare, mit Solarzellen 34 versehene Windabweiserlamelle 36, um bei geöffnetem Deckel 32 Fahrtwindgeräusche zu verringern.

Die einstückige Ausbildung des Glas-Festelements 10 bietet somit die Vorteile, daß, obwohl dadurch zwei unterschiedliche flächige Dach-Elemente 12 und 14 unterschiedlicher Funktion realisiert werden können, Dichtungsprobleme vermieden werden, die Herstellung einfach bleibt, Toleranzen bei der Herstellung auf einfache Weise ausgeglichen werden können, Elemente unterschiedlicher Dicke oder aus verschiedenen Materialien verwendet werden können und die Handhabung, insbesondere die Montage, einfach bleibt, weil nur ein Dachmodul gehandhabt werden muß.

Statt einer Glasscheibe und eines Solarelements können auch andere Elemente verwendet werden, wie z.B. eine mit Solarzellen versehene Glasscheibe, oberflächenbehandelte Bleche, lackierte Fahrzeugbleche, Kunststoffscheiben und ähnliches. Anstelle von zwei flächigen Dach-Elementen können auch drei oder mehr flächige Elemente auf die gleiche Weise mittels Umschäumung miteinander verbunden werden, so daß sie ein einziges Dachmodul bilden.

### Bezugszeichenliste

| | |
|---|---|
| Glasfestelement | **10** |
| durchsichtige Glasscheibe | **12** |
| Solarelement | **14** |
| Solarzellen | **16** |
| Substrat 18 | **18** |
| PUR-Umschäumung | **20** |
| (Dichtungsaufnahme-)Nut | **21** |
| Bereich zwischen 12 und 14 | **22** |
| Verstärkungselement | **24** |
| Dachhaut | **30** |
| Dachöffnung | **31** |
| Glasdeckel | **32** |
| Solarzellen von 36 | **34** |
| Windabweiserlamelle | **36** |

## Patentansprüche

1. Dachmodul für ein Fahrzeug, mit mindestens zwei flächigen Dach-Elementen (12, 14), die nebeneinander angeordnet sind, **dadurch gekennzeichnet, daß** die flächigen Dach-Elemente (12, 14) als Elemente unterschiedlicher Dicke und/ oder aus verschiedenen Materialien gebildet sind, die durch eine auch im Randbereich des Dachmoduls durchgehend vorgesehene Umschäumung (20) miteinander verbunden sind.

2. Dachmodul nach Anspruch 1, **dadurch gekennzeichnet, daß** die Umschäumung (20) aus einem Kunststoff, vorzugsweise aus Polyurethan (PUR) besteht.

3. Dachmodul nach einem der vorhergehenden Ansprüche, **dadurch gekennzeichnet, daß** die flächigen Dach-Elemente (12, 14) aus einer der Gruppen der durchsichtigen Glasscheiben, mit Solarzellen versehenen Glasscheiben, oberflächenbehandelten Blechen, lackierten Fahrzeugblechen und Kunststoffscheiben ausgewählt sind.

4. Dachmodul nach einem der vorhergehenden Ansprüche, **dadurch gekennzeichnet, daß** eines der flächigen Dach-Elemente (12) durchsichtig ist und das andere bzw. ein anderes (14) undurchsichtig ist.

5. Dachmodul nach Anspruch 4, **dadurch gekennzeichnet, daß** das undurchsichtige flächige Dach-Element (14) Solarzellen (16) aufweist.

6. Dachmodul nach einem der vorhergehenden Ansprüche, **dadurch gekennzeichnet, daß** die flächigen Dach-Elemente (12, 14) in dem Bereich (22), in welchem sie sich am nächsten liegen, durch einen Umschäumungsbereich (20) miteinander verbunden sind, in welchen ein Verstärkungselement (24) mit eingeschäumt ist.

7. Dachmodul nach Anspruch 6, **dadurch gekennzeichnet, daß** das Verstärkungselement (24) ein Blecheinleger ist.

## Claims

1. A roof module for a vehicle with at least two flat roof elements (12, 14) which are disposed one beside the other, **characterised in that** the flat roof elements (12, 14) are formed as elements of different thickness and/or of different materials and are connected to each other by a surrounding foam (20) also provided all around the marginal portion of the roof module..

2. A roof module according to Claim 1, **characterised in that** the surrounding foam (20) consists of a synthetic plastics material, preferably polyurethane (PUR).

3. A roof module according to one of the preceding claims, **characterised in that** the flat roof elements (12, 14) consist of one of the groups of transparent glass panes, glass panes which are provided with solar cells, surface treated plates, enamelled vehicle panels and synthetic plastic sheets.

4. A roof module according to one of the preceding claims, **characterised in that** one of the flat roof elements (12) is transparent and the other or another (14) is opaque.

5. A roof module according to Claim 4, **characterised in that** the opaque flat roof element (14) comprises solar cells (16).

6. A roof module according to one of the preceding claims, **characterised in that** the flat roof elements (12, 14), in the region in which they are situated closest to each other, are connected to each other by a foam-enclosed region (20) into which a reinforcing element (24) is integrally foamed.

7. A roof module according to Claim 6, **characterised in that** the reinforcing element (24) is a sheet metal inlay.

## Revendications

1. Module de toit de véhicule avec au moins deux éléments de toit plats (12, 14), qui sont disposés l'un à côté de l'autre, **caractérisé en ce que** les éléments de toit plats (12, 14) sont formés comme éléments d'épaisseur différente et/ou de matériaux différents, qui sont reliés entre eux par un enrobage de mousse (20)prévu également en continu dans la zone de bord du module de toit.

2. Module de toit selon la revendication 1, **caractérisé en ce que** l'enrobage de mousse (20) se compose de matière synthétique, de préférence de polyuréthane (PUR).

3. Module de toit selon l'une des revendications précédentes, **caractérisé en ce que** les éléments de toit plats (12, 14) sont sélectionnés à partir de l'un des groupes se composant de vitres en verre transparentes, de vitres en verre munies de cellules solaires, de tôles ayant subi un traitement de surface, de tôles d'automobiles vernies et de vitres en matériaux synthétiques.

4. Module de toit selon l'une des revendications précédentes, **caractérisé en ce que** l'un des éléments de toit plats (12) est transparent et que l'autre ou un autre (14) est opaque.

5. Module de toit selon la revendication 4, **caractérisé en ce que** l'élément de toit plat opaque (14) est muni de cellules solaires (16).

6. Module de toit selon l'une des revendications précédentes, **caractérisé en ce que** dans la zone (22), dans laquelle ils sont les plus proches, les éléments de toit plats (12, 14) sont reliés entre eux par une zone d'enrobage de mousse (20), dans laquelle un élément de renforcement (24) est intégré en même temps dans l'enrobage de mousse.

7. Module de toit selon la revendication 6, **caractérisé en ce que** l'élément de renforcement (24) est un insert en tôle.
